# EUROPEAN PATENT APPLICATION

(11) **EP 2 081 017 A1**
(43) Date of publication of application: **22.07.2009**
(21) Application number: 08100535.7
(22) Date of filing: 16.01.2008
(51) Int. Cl.: G01N 21/85, G01N 21/47

(54) **Offset probe**

(71) Applicant: FOSS Analytical AB, 263 21 Höganäs (SE)
(72) Inventor: Maddison, Tony, 252 77, Helsingborg (SE)
(74) Representative: Hilton, Charles Paul

(57) **Abstract**

An offset probe (10) having an elongate illuminating channel (12) and an elongate collecting channel (14) laterally displaced from the illuminating channel (12) at the distal end (24) of the probe (10). A reflective element (26) is disposed between the channels (12,14) and arranged to reflect incident optical radiation in a direction away from the distal end (24). A transparent window (28) at the distal end (24) may be employed to provide, in use, a volume free from sample material through which radiation may pass to and from the reflective element (26).

## Description

The present invention relates to an offset probe for use in optical spectroscopic studies and in particular to a probe for use in lateral transmission studies.

Spectral analysis, particularly infrared spectroscopy, is a known technique which is used to examine samples and monitor on-line processes. Typically, for an opaque sample, light of a known spectrum is directed at the sample which absorbs and scatters some of the light at various wavelengths. The diffusely scattered portion of the light is collected and analyzed, for example using a monchromator or an interferometer instrument to produce an absorption spectrum, in order to characterise the sample.

Fiber-optic probes are frequently used in combination with such instruments in an optical analyzer in order to direct light towards the sample and to collect the light scattered by the sample. One such probe is disclosed in US 6,137,108 of DeThomas et al. Here the probe comprises an illuminating fibre-optic bundle and two collecting fibre optic bundles, each laterally displaced from the illuminating fibre-optic bundle at a distal end by a small distance so as to collect light which has undergone diffuse reflection from the sample.

The accuracy and sensitivity of the analysis is dependent upon the quality and quantity of the diffusely scattered light collected from the sample by the offset probe. It is generally accepted that good collection efficiency results in higher sensitivity. Moreover, the more the light has interacted with a sample the more representative of the bulk sample the information obtainable form the collected light will be.

It is a problem with known offset probes that in order to maximise the collection efficiency then the size of the lateral offset needs to be optimised for the sample to be analysed. Samples exhibiting a low degree of scattering, such as skimmed milk or whey, allow the light to travel further into the product giving the same effect as a very long transmission path length. Enough light for permitting a measurement will be returned to a collection fibre which is laterally offset a relatively large distance from the emission fibre. Samples which exhibit a medium degree of scattering, such as cheese, butter and milk, will not allow the light to penetrate sufficiently deeply into the product to provide transmission like properties. The higher degree of scattering means that the lateral offset needs to be reduced with respect to that for use with samples having low scattering properties in order to ensure that sufficient light will reach the collection fibre. Samples which exhibit a high degree of scattering, such as whey powder and milk powder, would normally require a very short lateral transmission path length between the emission and the collection fibres in order to obtain sufficient light collection. At these short separations the detection methodology becomes one of reflection rather than lateral transmission and the amount of material sampled is greatly reduced.

It is an aim of the present invention to at least alleviate the above mentioned problem and to provide an offset probe for lateral transmission measurements in different samples each possessing a different degree of scattering.

This is achieved by an offset probe as described in and characterised by the present Claim 1. By providing a reflective surface between the illuminating channel and the collecting channel to reflect incident light back in to the sample then the interaction of the illumination with the sample is increased and more light is passed to the collecting channel than would otherwise be the case which leads to an increased collection efficiency. The number of reflections increases with the increasing degree of scattering of the sample being analysed.

Preferably the probe also includes an optical window, transparent to the optical radiation of interest at least in the regions of the reflective element and the distal ends of the two channels, at the distal end of the probe to act as a distancing element between the distal end and a sample under investigation. This allows the diffusely scattered light to interact directly with the reflective element and enhances the effectiveness of the element.

These and other advantages will be appreciated from a consideration of the following description of exemplary embodiments of the present invention, made with reference to the drawings in the accompanying figures of which:

Fig.1 illustrates schematically an optical analyzer according to the present invention;

Fig.2 illustrates schematically a first embodiment of an offset probe according to the present invention which is usable in the analyzer of Fig. 1; and

Figs.3 illustrate schematically a second embodiment of an offset probe according to the present invention which is usable in the analyzer of Fig. 1. Fig .3 (a) is a partial sectional view along the probe and Fig. 3(b) is a view of the distal end of the same probe.

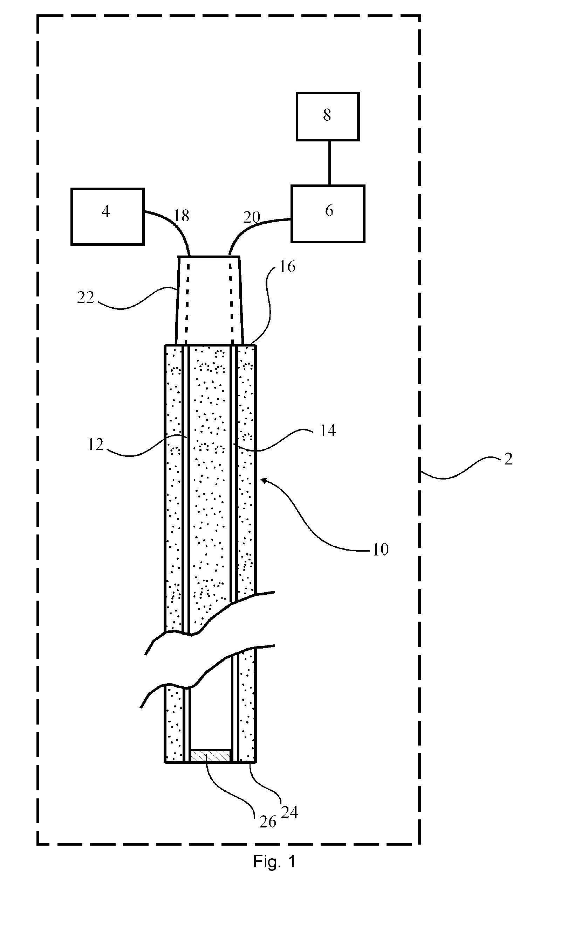

Considering now the optical analyzer 2 of Fig. 1. A light source 4 is provided for generating optical radiation for transmission to a sample to be analysed. The light source 4 may be a polychromatic source selected to generate and transmit polychromatic radiation in the wavelength region of interest or may be a monochromatic source of radiation, which monochromatic radiation may or may not be swept, for example by employing a polychromatic emission source in conjunction with an associated monochromator device having a movable dispersion element. The selection and realisation of the light source 4 is, as will be understood by the person skilled, dependent on the investigation to be performed by the analyzer 2 and may be readily realised using known construction techniques available to the skilled person.

A detector 6 is also included as an element of the analyzer 2 and may, in its most simple form comprise only a detector adapted to generate an output signal representative of the intensity of radiation at its detection surface. The detector 6 typically comprises a spectrophotometer of known type, such as a monochromator with a fixed or a moving dispersion element, a digital detector array (DDA), a Fourier-Transform interferometer or a Raman spectrometer, all of which act to generate an output signal representative of intensity information from separate and identifiable wavelength regions of incident optical radiation from the light source 4 after its interaction with the sample.

An analysis unit 8 of the analyser 2 is operably couplable to receive the output signal from the detector 6 and to process this signal using known techniques in order to provide an indication of a property of interest, such as chemical properties, of the sample. The analysis unit 8 may be hard wired to the detector 6, residing permanently within a same housing as the detector 6 (as illustrated in the present exemplary embodiment) or in a housing separate from the detector 6 (such as may be realised by a suitably programmed personal computer); or may be connectable to the detector 6 by means of a remote communications link (such as via an internet or area network connection), which link may or may not in whole or in part be a wireless link.

The analysis unit 8 typically has access to a calibration model, linking physical, chemical or other properties of interest to features of the light spectrum collected by detector 6 and is adapted to apply the model to this spectrum in order to determine the properties of interest of the sample. The calibration model may be constructed in a known manner using a database of spectra of reference samples in which the said properties have been determined using other, direct, analysis techniques.

The analyser 2 further comprises an optical probe 10 which here, by way of example only, is illustrated as having two light transmitting channels 12,14. These light channels 12,14, at a proximal end 16 of the probe 10 releasably connect to associated light channels 18,20 at a junction member 22. The corresponding light channels 18, 20 terminate respectively at the light source 4 and the detector 6 and form, together with the light channels 12,14 of the probe 10, a continuous path for optical radiation to and from a distal end 24 of the probe 10. All light channels12,14,18,20 may be readily formed in a known manner, such as by using one or more optical fibres. In the present embodiment the light channel 12 provides an elongate illuminating channel of the probe and the light channel 14 forms an elongate collecting channel of the probe 10 which is offset laterally from the illuminating channel 12 at the distal end 24 of the probe 10. Collocated with the distal end 24 and disposed between the laterally offset channels 12,14 is a reflective element 26. This reflective element 26 is arranged so that in use incident light that has been scattered from the sample under analysis is reflected back towards the sample where it will undergo further scattering by the sample.

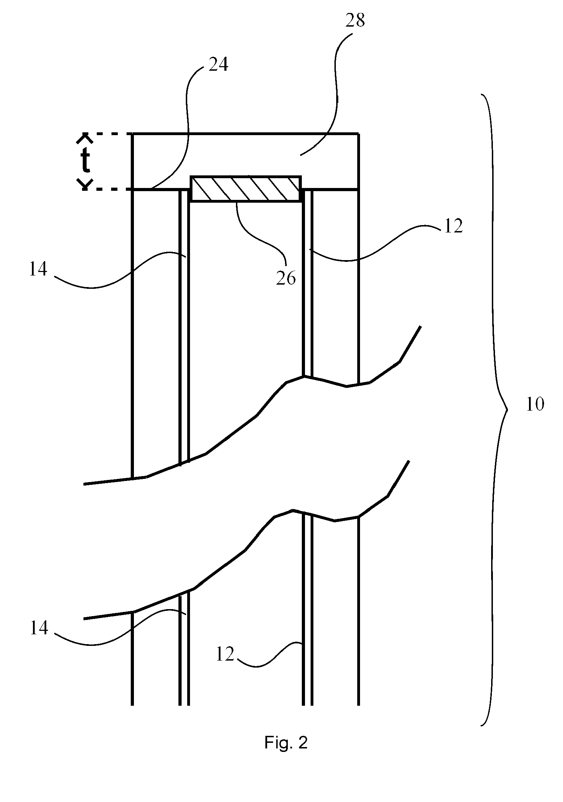

Considering now Fig.2 in which a first embodiment of a probe according to the present invention and which may act as probe 10 of the analyser 2 of Fig. 1 is illustrated, showing the distal end 24 of the probe 10 in greater detail.

Located between the illuminating channel 12 and the collecting channel 14 (such as may be suitably be formed of one or more optical fibres) is the reflecting element 26, the thickness of which is in the figure exaggerated for clarity. The reflecting element 26 may, for example, be a part of the distal end 24 or a thin reflective layer deposited on or in some other way affixed to the distal end 24 and is arranged to reflect incident optical radiation in a direction away from the distal end.

A window 28 that is transparent to the optical radiation of interest overlies and abuts the distal end 24 so that in use it provides a sample free volume of thickness, t, in which the optical radiation may travel uninterrupted between the sample and the reflective element 26, which for example may even be formed as a mirror layer on the surface of the window 28 abutting the distal end 24. In this manner sufficient diffusely scattered radiation even from a relatively highly scattering sample can be transmitted laterally through the sample from the emitting channel 12 to be collected by the collecting channel 14.

In use the window 28 and the reflective element 26 cooperate to generate a transmission path length through the sample which 'auto-adjusts' to the scattering properties of the sample under investigation. Radiation from the emitting channel 12 will be transmitted through samples having a relatively low degree of scattering to be collected by the collecting channel 14 with relatively few reflections from the reflective element 26. As the degree of scattering of the sample to be analysed increases then so to does the interaction of the radiation with the reflective element 26. This element 26 acts to provide an enhanced transmission path through the sample and to the collecting channel 14.

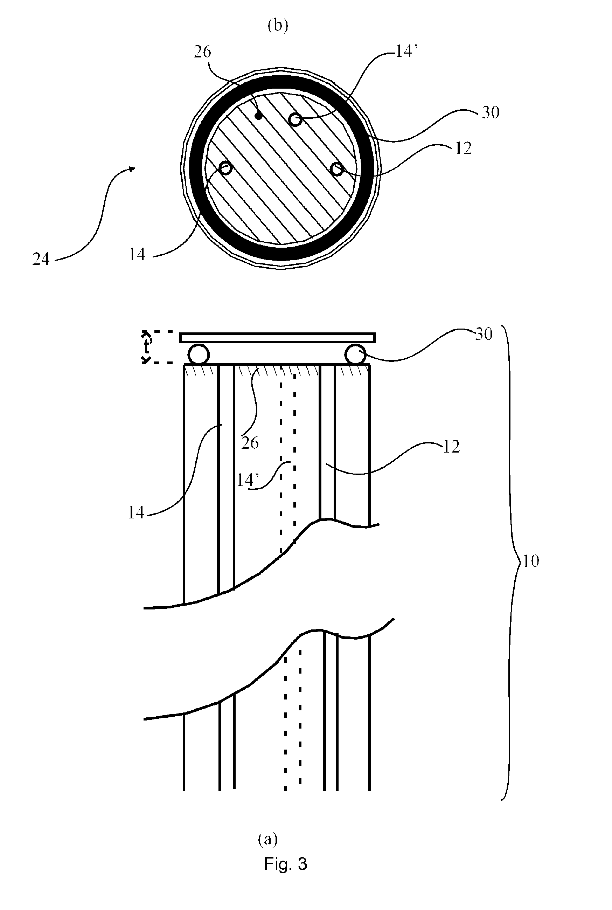

Considering now Figs.3 in which a second embodiment of a probe according to the present invention is illustrated and which may act as probe 10 of the analyser 2 of Fig. 1. Fig. 3b shows the distal end 24 of the probe 10 of Fig. 3a in greater detail.

A second collecting channel 14' is provided laterally offset from the illuminating channel 12 by a distance that is different from that offset between the first collecting channel 14 and the illuminating channel 12. In the present embodiment the surface of the distal end 24 is configured to act as the reflective element 26, for example by depositing a reflective layer over that surface. A seal 30, such as may be provided by an 'O' ring is disposed between the distal end 26 and a sheet of window material 32 to together provide a sample free volume of thickness, t', in which the optical radiation may travel uninterrupted between the sample and the reflective element 26 in a manner similar to the embodiment described above in relation to Fig.2. In the present embodiment the so described volume is largely absent of window material, which material itself may cause unwanted absorption or scattering of the radiation of interest, for example as a result of small, even microscopic, physical defects in the material that constitutes the window 28.

It will be appreciated that additional collecting channels or further illuminating channels may be included in the probe without departing from the invention as claimed. Moreover, a switch may be provided so that each channel 12, 14, 14' may act selectively as either the illuminating channel or the collecting channel.

## Claims

1. An offset probe for use in an optical analyser (2), the probe (10) comprising an elongate illuminating channel (12) and an elongate collecting channel (14) being, at a distal end (24) of the probe (10), offset laterally from the illuminating channel (12) **characterised in that** the probe (10) further comprises a reflective element (26) disposed at the distal end (24) to reflect incident light away therefrom.

2. An offset probe as claimed in claim 1 **characterised in that** the probe (10) further comprises one or more additional collecting channels (14'), each being laterally offset from the illuminating channel (12) and **in that** the reflective element (26) is disposed between each additional collecting channel (14') and the illuminating channel (12).

3. An offset probe as claimed in claim 1 or claim 2 **characterised in that** one or both the illuminating channel (12) and the one or more collecting channels (14,14') comprises a fibre optic arrangement.

4. An offset probe as claimed in any preceding claim **characterised in that** the probe (10) further comprises a distancing element (28; 30,32) located at the distal end (24) of the probe to cover at least the channels (12,14,14') and the reflective element (26) and being transparent to radiation of interest in those regions.

5. An offset probe as claimed in Claim 4 **characterised in that** the element (28) is located in abutment with the distal end (24) of the probe and has at a surface proximal the distal end (24) a reflective layer (26) to act as the reflective element.

6. An offset probe as claimed in Claim 4 **characterised in that** the distancing element comprises a window (32) held spaced apart from the distal end (24) by a seal (30).

7. An optical analyser (2) comprising an offset probe (10) having an elongate illuminating channel (12) and one or more elongate collecting channels (14), a light source (4) optically couplable to the illuminating channel (12) at a proximal end (16) of the probe, and a detector (6) optically couplable to the one or more collecting channels (14) at the proximal end (16) of the probe **characterised in that** the offset probe is a probe (10) as claimed in any preceding claim.
